# NEUE EUROPÄISCHE PATENTSCHRIFT

(11) **EP 1 956 336 B2**
(45) Veröffentlichungstag und Bekanntmachung des Hinweises auf die Entscheidung über den Einspruch: **12.09.2012**
(45) Hinweis auf die Patenterteilung: 07.10.2009
(21) Anmeldenummer: 08002328.6
(22) Anmeldetag: 08.02.2008
(51) Int. Cl.: F41G 7/00, F41G 7/22, G01S 7/481, G01S 17/88

(54) **Suchkopf für einen zielsuchenden Flugkörper**
Seeker for a target-seeking missile
Tête chercheuse pour un missile poursuivant une cible

(30) Priorität: 10.02.2007 DE 102007006710
(43) Veröffentlichungstag der Anmeldung: 13.08.2008
(73) Patentinhaber: LFK-Lenkflugkörpersysteme GmbH, 86529 Schrobenhausen (DE)
(72) Erfinder: Rüger, Roderich, 81827 München (DE)
(74) Vertreter: Hummel, Adam

(56) Entgegenhaltungen:
- EP-A- 1 248 120
- DE-C1- 4 235 266
- FR-A- 2 687 795
- US-A- 4 009 393
- US-A- 4 009 848
- US-A1- 2004 004 707
- US-B1- 6 606 066

## Beschreibung

Die Erfindung betrifft einen Suchkopf für Flugkörper zur Erfassung und Verfolgung eines mittels Laserpulsen mit vorbestimmter Pulswiederholungsfrequenz markierten Ziels mit einem auf die vom Ziel reflektierte Laserpulse ansprechenden Laser-Sensor und mit einem auf die vom markierten Ziel emittierte Infrarot-Strahlung (IR) ansprechenden bildgebenden IR-Sensor, deren Signale mittels einer zugeordneten Signalverarbeitungselektronik in die Zielanflugphase des Flugkörpers steuernde Lenksignale umgeformt werden.

Abbildende IR-Suchköpfe, die die Eigenstrahlung der Zielobjekte sensieren, sind vielfach bekannt. Sie erfordern ein vor dem Start des Flugkörpers im Suchkörperbild markiertes Ziel; gemäß dem sog. lock-on-bevor launch (LOBL) Verfahren wird das Ziel vom Suchkopf getrackt und angeflogen. Das Suchkopf-Sehfeld kann hierbei klein sein, es muss nur das zu erreichende Ziel darin Platz finden. Üblich hierzu sind Sehfelder in der Größenordnung von 1 °; vgl. DE 41 35 260 C1.

Mit solchen Suchköpfen können aber nur Ziele bekämpft werden, zu denen beim Abschuss des Flugkörpers Sichtverbindung besteht und die aus der entsprechenden Entfernung auch eine hinreichende Signatur im Suchkopf-Bild haben. Sind Bodenziele außerhalb direkter Sichtverbindung mit einem Infrarotsuchkopf erst nach dem Start - also nach dem sog. lock-on-after launch (LOAL) autonom zu finden, ist mit großer Ungewissheit hinsichtlich eines Treffers zu rechnen. Damit das Ziel nach einiger Flugstrecke des Flugkörpers mit einiger Sicherheit überhaupt im Sehfeld des Infrarotsuchkopfes erwartet werden kann, muss das Sehfeld groß sein, also mindestens etwa 10° betragen. Bei großem Sehfeld ist aber naturgemäß die lock-on Reichweite des IR-Suchkopfes entsprechend geringer. Bei einer vorgegebenen Baugröße ist die Reichweite des IR-Suchkopfes bei 10facher Sehfeldgröße etwa 10mal geringer. Darüber hinaus ist es unsicher, ob das Ziel, auch wenn es im Sehfeld ist, vom Suchkopf autonom gefunden wird und ob es das richtige Ziel ist.

Um diesem Übel abzuhelfen, werden für das LOAL-Verfahren Laserspot-Suchköpfe benutzt. Hierzu muss das Ziel mit Laserstrahlung bestimmter zeitlicher Frequenz beleuchtet werden. Der Laserspot-Suchkopf sucht diesen bestimmten Laserspot. Wenn es keine Störer gibt, funktioniert dieses Verfahren recht zuverlässig. Der entscheidende Nachteil besteht aber darin, dass das Ziel aktiv beleuchtet werden muss, der Gegner also gewarnt ist und somit Gegenmaßnahmen zu erwarten sind. Alle in der Praxis eingeführten Laserspot-Suchköpfe arbeiten in einem Spektralbereich um 1.06 µm; es könnten aber hier genauso gut die augensicheren Spektralbereiche mit einer Wellenlänge um 1.54 µm benutzt werden.

Gemäß der US-PS 6.111.241 sind sog. Dual-Mode-Suchköpfe vorgeschlagen worden. Dort ist für die Aufnahme der von einem mittels Laserpulsen mit einer vorbestimmten Pulswiederholungsfrequenz markierten Ziel reflektierten Laserstrahlen als Detektor eine sogenannte PIN-Fotodiode vorgesehen; für die Aufnahme der von dem markierten Ziel emittierten IR-Strahlung ist als Detektor ein bildgebendes Brennebenen-Array vorgesehen. Der Auswertung der Signale dieser Detektoren dient eine Signalverarbeitungselektronik, welche diese Signale derart korreliert, dass nur der jeweils letzte Laserimpuls als zielmarkierendes Signal aus einem durch das Array bestimmten Zielbereich für die Lenksignalerzeugung benutzt wird, um den Flugkörper auf den das Ziel markierenden Laserspot zu lenken.

US-A-4 009 848 offenbart einen Dual-Mode-Suchkopf für einen zielsuchenden Flugkörper mit eine gemeinsame Eintrittsoptik für den Laser- und für den Infrarot-Kanal der Signalverarbeitungselektronik.

US-A-4 009 393 offenbart einen Dual-Mode Suchkopf wobei eine Ultraviolett-Optik und eine Infrarot-Optik konzentrisch ineinander liegend angeordnet sind und eine gemeinsame Eintrittsoptik für den Ultraviolett- und für den Infrarot-Kanal bilden.

Ein Dual-Mode-Suchkopf erlaubt idealer Weise einen passiven Betrieb solang Sichtverbindung zum Ziel besteht, daher muss der IR-Suchkopf eine möglichst große Reichweite haben, das Sehfeld kann klein sein und nur für den Fall ohne Sichtverbindung zum Ziel wird der Laserspot-Suchkopf mit etwa 10° Sehfeld zur autonomen Ziel-, also Laserspot-Suche genutzt. Nachdem das Ziel gefunden ist, übernimmt der Infrarot-Suchkopf die Zielsuche und der Laserbeleuchter kann ausgeschaltet werden.

Infolge der engen Kardanrahmenbegrenzungen in einem Suchkopf muss für den Infrarot-Suchkopf und für den Laserspot-Suchkopf eine teilweise gemeinsame Optik benutzt werden, die mittels spektraler Strahlteilung in den Infrarot- und in den Laserspot-Kanal aufzuteilen ist. Die teilweise gemeinsame Nutzung der Optik bedingt aber, dass ein Teil der Optik für 1.06 µm respektive 1.54 µm und in einen für 8 bis 12 µm respektive für 3 bis 5 µm transparenten Teil aufzutrennen ist. Neben dieser Strahlteilung müssen Anpassoptiken für den Infrarot- und für den Laserkanal vorgesehen sein. Die Sehfeldgrößen für den Infrarot- und für den Laserkanal sind eng verknüpft und nicht mehr frei wählbar. Solche Dual-Mode-Optiken sind daher trotz großem Aufwand den Anforderungen hinsichtlich großer Reichweite für den IR-Kanal und großem Sehfeld für den Laserkanal nicht anpassbar, so dass mit vertretbarem Aufwand keine Infrarot- zu Laserkanal-Sehverhältnissen von z. B. 10fach, wie eigentlich erforderlich, erreichbar sind.

Hier setzt nun die Erfindung ein, deren Aufgabe es ist, einen neuen Dual-Mode-Suchkopf zu schaffen, der besser als bisher für den Einsatz in Verbindung mit zielsuchenden Flugkörpern geeignet ist.

Diese Aufgabe ist gemäß der Erfindung durch die Merkmale des Patentanspruchs 1 gelöst.

Weitere Merkmale der Erfindung ergeben sich aus den Unteransprüchen.

Gemäß der Erfindung ist also einem passiv arbeitenden IR-Suchkopf in der Mitte seiner Eintrittsoptik die für das Erkennen des mittels Laserstrahlen markierten Ziels notwendige Laser-Sensor-Optik angeordnet. Der Laser-Sensor ist vorteilhafter Weise als 4-Quadranten-Detektor ausgebildet. Solche Detektoren haben eine Kantenlänge von etwa drei Millimetern, so dass durch diesen Einsatz die optischen und mechanischen Bauteile für den IR-Sensor ungestört beibehalten werden können. Wie an sich bekannt, sind solche passiven IR-Suchköpfe um zwei Achsen kardanisch gelagert und weisen einen motorisch angetriebenen Spiegel zwecks zeilenweisem Abtasten des von der IR-Optik erfassten und über einen Umlenkspiegel auf dem IR-Detektor abgebildeten Gesichtsfeldes oder eine IR-Detektormatrix auf.

Durch die erfinderische Ausbildung des Dual-Mode-Suchkopfes sind die Sehfelder der Infrarot- und der Laserkanal-Optik je nach den Erfordernissen frei wählbar. Ein weiterer Vorteil ist darin zu sehen, dass auch das etwa 10° betragende Sehfeld für den Laserkanal und das etwa 1° betragende Sehfeld für den Infrarotkanal einfach realisierbar sind. Somit kann die Reichweite für den Infrarotkanal groß gewählt werden. So lange ein Ziel zu sehen ist, kann der Dual-Mode-Suchkopf allein rein passiv mit dem Infrarot-Suchkopf arbeiten. Für den Laserspot-Betrieb kann das Sehfeld des Laserspot-Suchkopfes groß gewählt werden, um ein beleuchtetes Ziel sicher finden zu können. Nur beim Zielen ohne Sichtverbindung beim Abschuss des Flugkörpers muss kurzzeitig der Laserspot-Suchkopf den zielbeleuchtenden Laserspot aktiv suchen. Ist das Ziel gefunden, kann wieder auf den rein passiven Infrarot-Suchkopf umgeschaltet werden.

Ein weiterer Vorteil ist darin zu sehen, dass die Infrarot-Optik als einfache IR-Optik im Spektralbereich von 8 bis 12 µm als transparente Einzellinse ausgebildet werden kann, so dass multispektraltransparente Linsen und zusätzliche Anpassoptiken entfallen. Entsprechendes gilt für die Laserspot-Optik, die ebenfalls als im Spektralbereich um 1.06 µm bis 1.54 µm arbeitende Einzellinse ausgebildet werden kann. Schließlich ermöglicht die erfindungsgemäße Ausbildung des neuen Dual-Mode-Suchkopfes auf einfache Weise eine Nachrüstung existierender Infrarot-Suchköpfe, da die dort vorhandenen Kardanrahmen unverändert bleiben können.

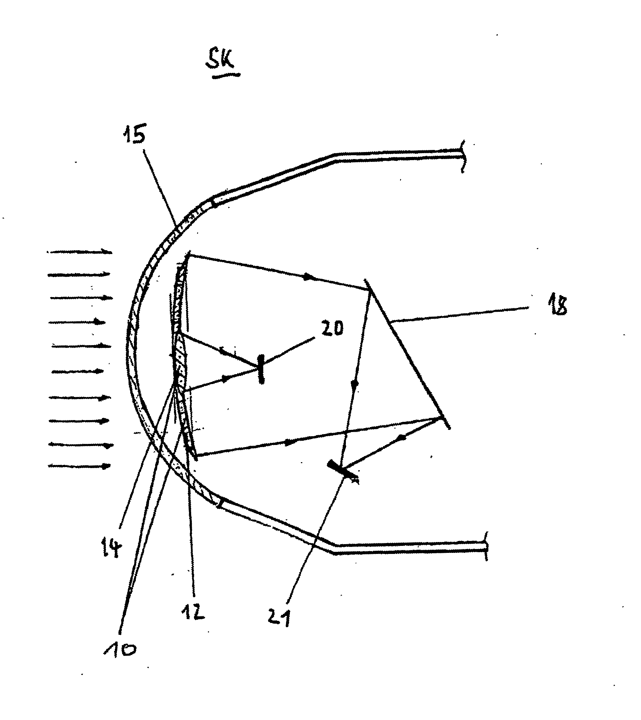

Die Erfindung ist nachfolgend an Hand eines in der Zeichnung mehr oder minder schematisch dargestellten Ausführungsbeispiels beschrieben.

Ein in der Zeichnung nicht näher dargestellter zielsuchender Flugkörper trägt in seinem vorderen Bereich einen Suchkopf SK, dessen Eintrittsoptik 10 eine einem IR-Kanal der nicht dargestellten Signalverarbeitungselektronik zugeordnete Linse 12 und eine konzentrisch dazu gleichachsig angeordnete, dem Laser-Kanal der Signalverarbeitungselektronik zugeordnete Linse 14 umfasst und von einem strahlendurchlässigen in die Optik einberechneten Dom 15 abgedeckt ist. Die durch die Optik 10 einfallenden IR-Strahlen - z. B. emittiert von einem hier durch einen Laserdesignator beleuchtetes Ziel - gelangen über einen 45°-Umlenkspiegel 18 auf einen Infrarot-Detektor 21 und werden dort in an sich bekannter Weise zeilenweise abgetastet; die hierbei erzeugten Signale dienen unter Mitwirkung der nicht dargestellten Signalverarbeitungselektronik der Erzeugung der Lenksignale für den in das Ziel zu steuernden Flugkörper.

In dem Bereich der Mittenabschattung der Linse 12 ist eine weitere Linse 14 für die Aufnahme der von dem von Laserstrahlen markierten Ziel reflektierten Laserstrahlen angeordnet, die einen Laser-Detektor 20 beaufschlagen, der als 4-Quadranten-Detektor ausgebildet ist. Die Ausgangssignale dieses Laser-Detektors werden in der genannten nicht dargestellten Lenksignalverarbeitungselektronik ebenfalls in Lenksignale für den Flugkörper umgeformt. Nach Zielerfassung über die reflektierten Laserstrahlen (Sensorspot-Mode) schaltet die Lenksignalverarbeitungselektronik auf die passive IR-Lenkung (Infrarot-Mode) um.

Gemäß einem bevorzugten Ausführungsbeispiels weist die Optik 14 für den Laserkanal einen Durchmesser von 30 mm auf und arbeitet in einem Wellenbereich von 1 µm respektive 1.5 µm mit einem Sehfeld von 5° bis 10°. Die Optik 12 für den passiv arbeitenden IR-Kanal weist einen Durchmesser von ca. 90 mm auf und benötigt, da diese erst wirksam wird, nachdem das Ziel markiert ist, ein kleines Sehfeld von 1 ° bis 2° und arbeitet in einem Spektralbereich von etwa 3 µm bis 5 µm bzw. von 8 µm bis 12 µm. Der Dom 15 besteht aus ZnS und weist bei einer Wellenlänge von 1 µm respektive 1.5 µm und 8 - 12 µm respektive 3 - 5 µm eine Transmissionsrate von > 70 % auf.

### BEZUGSZEICHENLISTE

- SK: Suchkopf

- 10: Eintrittsoptik
- 12: Infrarot-Optik
- 13: Umlenkspiegel
- 14: Laser-Optik
- 15: Dom
- 20: Laser-Detektor
- 21: IR-Detektor

## Patentansprüche

1. Dual-Mode-Suchkopf für einen zielsuchenden Flugkörper, der einen die von einem mittels Laserpulsen markierten Ziels reflektierten Laserstrahlen aufnehmenden Laser-Detektor (20) und einen die von dem Ziel emittierten Infrarot-Strahlung aufnehmenden IR-Detektor (21) aufweist und mit einer Signalverarbeitungselektronik für das Umformen der von den Detektoren (21) gelieferten Signale in den Lenkflugkörper steuernde Lenksignale, **dadurch gekennzeichnet, dass** eine für einen Spektralbereich von 3 µm bis 5 µm oder 8 µm bis 12 µm ausgelegt und korrigierte Infrarotoptik (12) und ein auf die Laserpulse ansprechende für einen Spektralbereich von 1,06 µm respektive 1,54 µm ausgelegte und korrigierte Laseroptik (14) jeweils als transparente auf unterschiedliche Sehfeldgrößen ausgelegte Einzellinsen ausgebildet und gleichachsig und konzentrisch ineinander liegend angeordnet sind und eine gemeinsame Eintrittsoptik (10) für den Laser- und den Infrarot-Kanal der Signalverarbeitungselektronik bilden, wobei die Detektoren (20, 21) im Bezug zur Eintrittsoptik (10) derart angeordnet sind, dass die einfallenden Laserstrahlen unter Wegfall von multispektraltransparenteri Linsen und zusätzlichen Anpassoptiken auf den Laserdetektor (20) und die IR-Strahlen unter Wegfall von multispektraltransparenten Linsen und zusätzlichen Anpassoptiken nach Umlenkung mittels eines Umlenkspiegels (18) den IR-Detektor (21) auftreffen.

2. Suchkopf nach Anspruch 1, **dadurch gekennzeichnet, dass** die der Laserstrahlung zugeordnete Optik (14) ein Sehfeld in der Größenordnung von 5° bis 10° und die der IR-Strahlung zugeordnete Optik (12) ein Sehfeld von 1° bis 2° aufweist.

3. Suchkopf nach Anspruch 1 oder 2 **dadurch gekennzeichnet, dass** der die Optik (10) des Suchkopfes (SK) abdeckende Dom (15) aus ZnS besteht und bei einer Wellenlänge von 1 µm respektive 1.5 µm und 8 - 12 µm respektive 3 - 5 µm eine Transmissionsrate von >70% aufweist.

## Claims

1. Dual-mode seeker head for a target-seeking missile, which has a laser detector (20) which receives the laser beams reflected from a target which is marked by means of laser pulses, and has an IR detector (21) which receives the infrared radiation emitted by the target, and having signal processing electronics for conversion of the signals produced by the detectors (21) to steering signals which control the guided missile **characterized in that** infrared optics (12) which are designed and corrected for a spectral range from 3 *m to 5 µm, or 8 µm to 12 µm, and laser optics (14) which respond to the laser pulses and which are designed and corrected for a spectral range of 1.06 µm or 1.54 µm, respectively, are in each case embodied as transparent single lenses designed for different magnitudes of the field of view and are arranged on the same axis and concentrically one inside the other and form common inlet optics (10) for the laser channel and the infrared channel of the signal processing electronics, with the detectors (20, 21) being arranged with respect to the inlet optics (10) such that the incident laser beams strike the laser detector (20) with omission of multi-spectrally transparent lenses and additional matching optics and the IR beams strike the IR detector (21) with omission of multi-spectrally transparent lenses and additional matching optics after being deflected by means of a deflection mirror (18).

2. Seeker head according to Claim 1, **characterized in that** the optics (14) which are associated with the laser radiation have a field of view in the order of magnitude of 5° to 10°, and the optics (12) which are associated with the IR radiation have a field of view of 1° to 2°.

3. Seeker head according to Claim 1 or 2, **characterized in that** the dome (15) which covers the optics (10) of the seeker head (SK) is composed of ZnS and has a transmission rate of > 70% at a wavelength from 1 µm to 1.5 µm and 8 - 12 µm or 3 - 5 µm.

## Revendications

1. Tête chercheuse à double mode pour un missile à acheminement vers la cible, laquelle présente un détecteur de laser (20) qui capte les rayons laser réfléchis par une cible marquée au moyen d'impulsions laser ainsi qu'un détecteur d'infrarouges (21) qui capte le rayonnement infrarouge émis par la cible et comprend une électronique de traitement de signal pour transformer les signaux délivrés par les détecteurs (21) en signaux de guidage qui commandent le missile guidé, **caractérisée en ce qu'**une optique à infrarouge (12) conçue et corrigée pour une plage spectrale de 3 µm à 5 µm ou de 8 µm à 12 µm et une optique à laser (14) qui réagit aux impulsions laser, conçue et corrigée pour une plage spectrale de 1,06 µm, respectivement de 1,54 µm, sont réalisées à chaque fois sous forme de lentille unique transparente conçue pour différentes tailles de champs de vision et sont disposées de manière équiaxiale et concentrique l'une dans l'autre et forment une optique d'entrée commune (10) pour le canal laser et infrarouge de l'électronique de traitement de signal, les détecteurs (20, 21) étant disposés de telle sorte par rapport à l'optique d'entrée (10) que les rayons laser incidents, en l'absence de lentilles transparentes multispectrales et d'optiques d'adaptation supplémentaires, viennent frapper le détecteur laser (20) et que les rayons infrarouge, en l'absence de lentilles transparentes multispectrales et d'optiques d'adaptation supplémentaires, viennent frapper le détecteur d'infrarouges (21) après une déviation au moyen d'un miroir de déviation (18).

2. Tête chercheuse selon la revendication 1, **caractérisée en ce que** l'optique (14) associée au rayonnement laser présente un champ de vision de l'ordre de 5° à 10° et l'optique (12) associée au rayonnement infrarouge présente un champ de vision de 1° à 2°.

3. Tête chercheuse selon la revendication 1 ou 2, **caractérisée en ce que** la calotte (15) qui recouvre l'optique (10) de la tête chercheuse (SK) est en ZnS et présente un facteur de transmission > 70 % à une longueur d'onde de 1 µm ou de 1,5 µm et de 8-12 µm ou de 3-5 µm.
